# FASCICULE DE BREVET EUROPEEN

(11) **EP 0 389 548 B1**
(45) Date de publication et mention de la délivrance du brevet: **15.09.1993**
(21) Numéro de dépôt: 89900255.4
(22) Date de dépôt: 24.11.1988
(51) Int. Cl.: G01K 11/06

(54) **DISPOSITIF POUR LE CONTROLE D'UN EVENTUEL RECHAUFFEMENT D'UN PRODUIT ET POUR L'ENREGISTREMENT PAR UN MARQUAGE IRREVERSIBLE D'UNE TELLE EVENTUALITE**
VORRICHTUNG ZUM KONTROLLIEREN EINER EVENTUELLEN WIEDERERWÄRMUNG EINES PRODUKTES UND ZUM REGISTRIEREN VON EINER IRREVERSIBLEN MARKIERUNG EINES SOLCHEN EREIGNISSES
DEVICE FOR THE CONTROL OF A POSSIBLE WARMING UP OF A PRODUCT AND FOR THE RECORDING BY AN IRREVERSIBLE MARKING OF SUCH A POSSIBILITY

(30) Priorité: 24.11.1987 FR 8716262
(43) Date de publication de la demande: 03.10.1990
(73) Titulaire: IZOARD, Patrick, F-92200 Neuilly-sur-Seine (FR)
(72) Inventeur: IZOARD, Patrick, F-92200 Neuilly-sur-Seine (FR)
(74) Mandataire: Degret, Jacques
(86) Numéro de dépôt international: FR8800577
(87) Numéro de publication internationale: WO8904952

(56) Documents cités:
- EP-A- 0 156 912
- US-A- 2 379 459
- Patent Abstracts of Japan, Vol. 9, no. 50, (P-339)(1773) 5 March 1985 & JP, A, 59188528

## Description

La présente invention a pour objet un dispositif pour le contrôle d'un éventuel réchauffement d'un produit, au-dessus d'une température prédéterminée, et pour l'enregistrement d'une telle éventualité par un marquage irréversible extérieurement audit produit.

Elle s'applique en particulier au contrôle de la température d'un produit alimentaire, ou d'un produit pharmaceutique, ou de tout autre produit qui doit être conservé au froid, et elle est destinée à surveiller et indiquer un éventuel réchauffement de l'un quelconque des produits précités, notamment d'un produit surgelé ou congelé, ou plus simplement d'un produit qui, pour sa bonne conservation, doit être maintenu à une température inférieure à la température ambiante.

Sous l'expression "chaîne du froid", on désigne la succession des étapes parcourues par un produit depuis sa surgélation ou sa congélation, et d'une façon plus générale depuis sa mise en température pour une bonne conservation, jusqu'à sa consommation s'il s'agit d'un produit alimentaire et jusqu'à son utilisation s'il s'agit d'un produit pharmaceutique.

On sait que la garantie de la qualité et de l'hygiène d'un produit surgelé ou congelé, ou plus simplement frais, impose une règle stricte, à savoir que la chaîne du froid ne soit jamais rompue.

On connaît en effet les risques que peut provoquer, notamment pour la santé, la décongélation accidentelle, totale ou partielle, d'un produit alimentaire surgelé ou congelé, entre la fabrication et la consommation du produit en question.

Aussi, à tout instant de l'existence du produit surgelé, entre sa fabrication et sa consommation, il est indispensable d'assurer le maintien dudit produit à très basse température et de ne jamais interrompre la chaîne du froid.

Pour exemples, pendant son stockage après fabrication, le produit est maintenu a - 30°C dans un entrepôt frigorifique ; ensuite il est maintenu a - 20°C ou - 25°C pendant son transport par wagon et/ou camion frigorifiques ; enfin il est maintenu à -18°C sur les présentoirs des lieux de vente, ainsi que dans le congélateur ou le conservateur du consommateur du produit.

D'ailleurs, d'une façon générale, les législations en vigueur dans les pays producteurs de produits congelés ou surgelés fixent impérativement la conservation des produits à - 18°C avec une tolérance de ± 3°C.

Au-delà, tout réchauffement du produit, même passager et limité, peut être préjudiciable à la qualité et à l'hygiène dudit produit.

Ainsi, à partir de - 7°C, le processus bactériologique commence à se développer et la réaction microbienne qui en résulte est irréversible et se poursuit même si le produit concerné est à nouveau amené à la température d'au moins - 18°C. Un produit alimentaire ayant dépassé cette température de - 7°C, même pendant un intervalle de temps relativement court, ne doit donc pas être surgelé à nouveau, sous peine de risques graves pour la santé du consommateur.

En première conséquence de cette observation, les parties prenantes lors du dernier Congrès International du Froid ont alors convenu d'admettre qu'un produit ayant été maintenu à une température de 0°C, et ayant donc subi une décongélation, même partielle, est devenu impropre, voire dangereux, à la consommation.

D'ailleurs, certaines législations européennes et nord-américaines ont imposé aux fabricants de produits surgelés de faire figurer sur les emballages la mention suivante : "Afin de conserver toute la qualité de ce produit, ne pas le recongeler une fois qu'il a été décongelé".

La présente invention a donc pour but de proposer un moyen permettant de surveiller et de savoir avec une totale sécurité si le produit est resté exposé à une température égale ou supérieure à une température prédéterminée (par exemple - 15°C, ou - 7°C, ou 0°C, ou + 4°C) et en variante permettant de savoir si une telle exposition au-dessus de la température prédéterminée a eu lieu pendant une période de temps suffisante pour rendre le produit définitivement impropre à la consommation.

On connait déjà certains dispositifs qui permettent de contrôler un éventuel réchauffement d'un produit frais, ou surgelé ou congelé, et d'enregistrer une telle éventualité par un marquage irréversible, extérieurement audit produit.

De tels dispositifs connus ont en commun la particularité de comprendre une enveloppe dans laquelle est enfermée une substance active ayant son point de transition liquide-solide à la température prédéterminée à contrôler, enveloppe qui est associée à un support en un matériau absorbant apte à être marqué par ladite substance active lorsqu'elle est sous sa forme liquide.

Le brevet US-A-2 379 459 décrit un tel dispositif.

Dans certains de ces dispositifs, le support absorbant est placé à l'extérieur de l'enveloppe enfermant la substance active. Pour sa part l'enveloppe est en un matériau cassable, dégradable ou poreux, et la substance active enfermée dans une telle enveloppe, généralement une matière colorante capable de colorer le support absorbant, est séquestrée dans ladite enveloppe sous sa forme liquide.

Quelle que soit la caractéristique du matériau constituant l'enveloppe, cassable, dégradable ou poreux, le fonctionnement de tels dispositifs est le suivant.

L'enveloppe enfermant le liquide actif et entourée du support absorbant est associée au produit dont la température froide est à contrôler, avant mise au froid, congélation ou surgélation, dudit produit.

Lors du refroidissement du produit, pour l'amener à sa température idéale de conservation, par une technique lente (congélation) ou par une technique ultra rapide (surgélation), le liquide enfermé dans l'enveloppe se solidifie lorsque la température de la chaîne du froid est atteinte, ladite solidification s'accompagnant d'une augmentation notable du volume de la substance active enfermée.

Dans le cas où l'enveloppe est en un matériau cassable, par exemple du verre, ladite enveloppe se brise en fin de solidification de la substance active, mais cette substance ne s'écoule pas tant que la température ne remonte pas nettement au-dessus de la température prédéterminée qui correspond au point de transition liquide-solide ainsi qu'à la température maximale de la chaîne du froid. A l'inverse, dès que la température précitée est franchie, à la suite d'un réchauffement, même de courte durée, du produit frais à contrôler, la substance active passe alors de l'état solide à l'état liquide, et par suite imprègne le support absorbant, en le colorant de manière irréversible, ce qui permet de déceler visuellement qu'il y a eu rupture de la chaîne du froid.

Le brevet FR-A-2.361.635 décrit un tel dispositif.

Le brevet GB-A-2.051.361, dont le préambule de la description développe largement les dangers consécutifs à la rupture de la chaîne du froid, décrit un dispositif du genre précité, à lecture toutefois plus directe, c'est-à-dire sans support absorbant, la disparition d'un moyen mécanique séparant une solution aqueuse saline d'une poudre d'un agent colorant provoquant le contact de ladite solution et de ladite poudre et par suite la coloration de la solution qu'il est possible de contrôler visuellement depuis l'extérieur du dispositif.

Le brevet CH-A-585.396 décrit une variante du dispositif précité, variante dans laquelle le support absorbant est placé hors de l'enveloppe enfermant la substance active, à l'intérieur d'un compartiment qui, en prolongeant l'enveloppe, forme avec elle une capsule unique. Le principe de fonctionnement de ce dispositif est toutefois équivalent à celui décrit dans le brevet FR-A-2.361.635, à savoir qu'à l'instant de la solidification de la substance active, la paroi de séparation entre l'enveloppe et le compartiment est brisée par suite de l'augmentation du volume de ladite substance active. Une fenêtre pratiquée dans la capsule en regard du compartiment dans lequel est placé le support absorbant permet d'observer tout réchauffement éventuel du produit, par la coloration du support imprégné par la substance active lorsque, à la rupture de la chaîne du froid, une partie au moins de la substance active est passée de l'état solide à l'état liquide et s'est écoulée depuis l'enveloppe, à l'intérieur du compartiment.

Le brevet FR-A-2.361.635 prévoit une variante du dispositif précité, variante dont toutefois le principe de fonctionnement demeure.

Selon cette variante, le matériau constituant l'enveloppe est dégradable à une température égale ou inférieure à la température qui est à contrôler, soit parce qu'il se craquelle spontanément, soit parce qu'il devient poreux. Autrement dit, en même temps que la substance active passe de l'état liquide à l'état solide, son enveloppe perd son étanchéité, à la suite de l'apparition spontanée de fentes ou de trous. Par suite, en cas de réchauffement du produit au-dessus de la température à contrôler, une partie au moins de la substance active redevenue liquide colore le support absorbant, indiquant ainsi que la chaîne du froid a été interrompue.

Tous les dispositifs ainsi connus ont toutefois certains inconvénients.

Ceux qui prévoient une enveloppe en un matériau cassable sont rarement compatibles avec le contrôle de produits alimentaires. En outre, l'enveloppe peut accidentellement se briser avant solidification de la substance active, provoquant ainsi le marquage du produit à contrôler alors que ce dernier n'a pas encore été refroidi à sa température de conservation idéale. Un produit ainsi marqué sera donc jeté sans qu'il soit absolument établi qu'il a subi le moindre réchauffement.

Quant au dispositif qui prévoit une enveloppe en un matériau dégradable, il faut être certain que le produit auquel a été associé ledit dispositif a été refroidi à une température suffisamment basse pour provoquer ladite dégradation. Si la température de refroidissement du produit est suffisante pour le congeler mais insuffisante pour dégrader l'enveloppe, l'imprégnation du support absorbant par la substance active sera impossible, quand bien même la chaîne du froid serait interrompue et la substance active redevenue liquide à l'intérieur de l'enveloppe.

Parallèlement, il a donc été proposé d'autres dispositifs permettant de contrôler un éventuel réchauffement d'un produit et d'enregistrer par un marquage irréversible une telle éventualité, ces dispositifs étant remarquables par les particularités suivantes :
- l'enveloppe est cette fois en un matériau non dégradable et non cassable,
- la substance active est enfermée sous sa forme solide dans l'enveloppe alors que, selon les techniques précitées, elle y est enfermée sous sa forme liquide,
- le support absorbant est également enfermé dans l'enveloppe et placé au contact de la masse de la substance active solide au lieu, comme le préconisent les techniques précitées, d'entourer ladite enveloppe.

Le brevet US-A-4.148.272 décrit un dispositif de cet autre type. Ce dispositif comprend : a) une enveloppe hermétiquement close dans laquelle est enfermée une substance active ayant son point de transition liquide-solide à ladite température prédéterminée, ladite enveloppe étant en un matériau étanche aux gaz et aux liquides et au moins pour partie transparent dans une zone, et ladite substance étant enfermée dans cette enveloppe sous sa forme solidifiée, et b) un support en un matériau absorbant apte à être imprégné par la substance puis à permetre la diffusion par capillarité de cette substance lorsque celle-ci est sous sa forme liquide, ledit support étant également enfermé dans l'enveloppe de façon telle qu'il soit placé au contact de la masse de ladite substance active solide et qu'il soit au moins pour partie visible au travers de la zone transparente de l'enveloppe.

Dans ce dispositif, l'enveloppe est réalisée à partir de deux feuilles d'un film de polyéthylène, de polystyrène ou de chlorure de polyvinyle, donc effectivement incassable et non dégradable, associées l'une à l'autre par scellage à chaud. Avant fermeture de l'enveloppe, une solution d'eau additionnée d'acide phosphorique est introduite dans le fond de ladite enveloppe, puis l'ensemble enveloppe-solution est soumis à un refroidissement brutal, par exemple en étant plongé dans un bain d'azote liquide, de sorte que ladite solution se solidifie. Ensuite, on place une extrémité d'une bande allongée, de quelques millimètres de large, au contact du bloc de la solution gelée et on associe l'autre extrémité de cette bande à un support imprégné d'un indicateur coloré traditionnel, par exemple de couleur jaune à l'état pur et virant au rouge en milieu acide ; dans ce dispositif, la bande est choisie en un matériau absorbant et le support terminal est placé sous une zone transparente de l'enveloppe pour permettre le contrôle visuel de couleur extérieurement à l'enveloppe.

L'enveloppe contenant la solution gelée, ladite bande et le support imprégné de l'indicateur coloré est alors scellée, et conservée au froid, prête à être associée à tout produit dont le maintien correct au froid doit être contrôlé.

En soi, ledit contrôle est simple. Si le produit associé à une telle enveloppe subit un réchauffement trop prolongé la solution eau-acide passe de son état solide à son état liquide et commence à imprégner la bande absorbante.

Le liquide diffuse ensuite progressivement par capillarité le long de ladite bande et au bout de quelques minutes, fonction de la largeur, de la longueur, de l'épaisseur et de la qualité d'absorption de la bande, le liquide atteint le support coloré, sauf si dans l'intervalle l'ensemble produit-enveloppe a été replacé à la température froide convenable, auquel cas le liquide s'est à nouveau solidifié et a ainsi cessé sa migration. En atteignant le support coloré, le liquide provoque un changement de couleur -l'indicateur virant du jaune au rouge-qui constitue l'information selon laquelle le produit associé n'est plus consommable. En effet, la couleur rouge ainsi donnée au support terminal est marquée de façon irréversible et elle constitue le témoin définitif de la décongélation intervenue, preuve que la chaîne du froid a été rompue.

Si le dispositif de contrôle objet du brevet US-A-4.148.272 a l'avantage d'être fiable, irréversible, indépendant du milieu extérieur et a priori facilement visible et contrôlable, il présente malgré tout certains inconvénients inhérents à sa constitution et à son mode opératoire.

En premier lieu, pour provoquer un changement de couleur de l'indicateur coloré suffisamment net pour être significatif et interprété en tant que preuve de la rupture de la chaîne du froid, il faut que l'acide dilué dans l'eau soit un acide fort tel l'acide phosphorique. Dès lors, il existe un danger évident en cas de destruction accidentelle de l'enveloppe, à savoir que l'acide peut venir au contact du produit à contrôler, et l'imprégner, et qu'il peut aussi venir au contact de n'importe lequel des autres produits placé à côté ou en-dessous dudit produit à contrôler. Si ces autres produits ne sont pas protégés, et si la destruction accidentelle de l'enveloppe n'a pas été constatée avant qu'ils soient extraits du compartiment froid dans lequel ils sont stockés avec le produit à contrôler, il y a alors un risque qu'ils soient consommés avec l'acide fort qui les imprègne, et par suite la santé du consommateur peut en souffrir gravement.

En deuxième lieu, il a été constaté que l'information donnée par un simple changement de couleur est en réalité difficilement intelligible pour le consommateur d'attention moyenne.

D'abord, pour que le consommateur puisse interpréter ledit changement de couleur, il faut que le dispositif décrit ci-dessus soit accompagné d'une notice d'information qui contient au moins quelques explications concernant les différentes couleurs possibles que le consommateur pourra observer et quelques avertissements sur les dangers qu'il y aurait à consommer le produit pour le cas où serait observée une couleur particulière. Le fait d'associer le dispositif décrit ci-dessus à une notice d'information constitue une opération manuelle supplémentaire, et par suite un coût supplémentaire. Ensuite, cette association est commercialement peu fiable : les produits surgelés ou congelés sont en général conserves en vrac dans les magasins de vente au détail et ils sont manipulés sans soin particulier par la clientèle ; ainsi, il y a un risque important que la notice d'information soit arrachée et, dès cet instant, le produit qui était associé à la notice égarée n'est plus susceptible d'être vendu car ni le vendeur, ni l'acheteur n'est en possession intellectuelle des éléments lui permettant d'associer avec certitude une des autres notices d'explication réservée à un quelconque autre produit au produit concerné par la perte de la notice. Il est à craindre en effet qu'il n'y ait pas uniformité dans l'emploi des couleurs d'un fabricant de produits surgelés à l'autre, ni même qu'il y ait uniformité des couleurs dans les gammes de produits proposées par un même fabricant. Au surplus, il a été constaté que, quand bien même le produit acheté par un consommateur potentiel comprendrait le dispositif décrit ci-dessus et la notice d'explication appropriée, l'information du consommateur sera incertaine car difficile à mettre en place ; on sait qu'il est difficile de demander a un consommateur d'attention moyenne d'avoir à interpréter correctement un signal d'alarme donné par une simple couleur ; en outre, on sait que tout effort d'interprétation peut se traduire par des erreurs.

La présente invention, comme définie dans revendication 1, a pour but de fournir un dispositif pour le contrôle d'un éventuel réchauffement d'un produit ou pour l'enregistrement d'une telle éventualité, par un marquage irréversible, qui élimine les inconvénients précités, et notamment qui évite l'emploi de tout produit -tel un acide- qui ne soit pas "agréé alimentaire" et qui évite que le consommateur ait à se livrer à une quelconque interprétation.

Ladite invention a donc pour objet un dispositif comprenant, de façon connue : a) une enveloppe hermétiquement close dans laquelle est enfermée une substance active ayant son point de transition liquide-solide à ladite température prédéterminée, ladite enveloppe étant en un matériau étanche aux gaz et aux liquides et au moins pour partie transparent dans une zone, et ladite substance étant enfermée dans cette enveloppe sous sa forme solidifiée, et b) un support en un matériau absorbant apte à être imprégné par la substance puis à permettre la diffusion par capillarité de cette substance lorsque celle-ci est sous sa forme liquide, ledit support étant également enfermé dans l'enveloppe de façon telle qu'il soit placé au contact de la masse de ladite substance active solide et qu'il soit au moins pour partie visible au travers de la zone transparente de l'enveloppe, caractérisé en ce que, dans sa partie visible au travers de ladite zone transparente de l'enveloppe, le support comprend au moins une inscription ayant une couleur identique à celle du support et en ce que la substance active contient une matière apte à modifier irréversiblement la couleur de l'un des deux éléments constitués par l'inscription et par la partie du support entourant cette dernière et en revanche impropre à modifier la couleur de l'autre de ces deux éléments, de sorte que lorsque, atteignant la température prédéterminée, ladite substance active passe de son état solide à son état liquide et imprègne alors le support, elle marque définitivement ledit support par contraste de couleurs autour de l'inscription.

Ainsi, il est certain qu'à toute rupture de la chaîne du froid, atteinte à une température où la substance active passe de l'état solide à l'état liquide, le matériau absorbant en contact avec ladite substance est nécessairement imprégné et que, pour autant que le temps pendant lequel le produit à contrôler a été laissé a une température supérieure à celle à contrôler a été suffisant pour que la substance active diffuse par capillarité jusqu'à la partie du support qui comprend l'inscription, ladite substance active provoque par un contraste de couleurs autour de l'inscription une mise en exergue de ladite inscription qui devient alors claire et intelligible pour le consommateur et qui témoigne de la décongélation intervenue.

Dans une première variante de réalisation du dispositif selon l'invention, la substance active contient une matière apte à modifier irréversiblement la couleur du support, au moins dans sa partie qui entoure l'inscription, et en revanche impropre à modifier la couleur de l'inscription. Avantageusement, la substance active peut être une solution aqueuse et l'inscription est alors imprimée avec de l'encre hydrophobe dont la couleur est identique à celle du support. L'inscription peut aussi être recouverte d'un vernis incolore impropre à être imprégné par la substance active à l'état liquide.

Dans une deuxième variante de réalisation du dispositif selon l'invention, la substance active contient une matière apte à modifier irréversiblement la couleur de l'inscription et en revanche impropre à modifier la couleur de la partie du support qui entoure ladite inscription. L'inscription peut alors être imprimée avec une encre neutre à l'état sec, et qui se colore lorsqu'elle est imprégnée par la substance active à l'état liquide.

Dans une troisième variante de réalisation du dispositif selon l'invention, le support absorbant contient, au moins dans sa partie qui entoure l'inscription, un composant susceptible de prendre irréversiblement une nouvelle couleur, différente de celle de ladite inscription, lorsqu'il est mouillé par la substance active à l'état liquide.

Suivant une caractéristique avantageuse de l'invention, la substance active est enfermée dans l'enveloppe, sous sa forme solide, à l'intérieur d'un puits formé dans ladite enveloppe par thermoformage ou par un procédé similaire. La substance active peut être de l'eau additionnée d'une substance colorante et/ou d'acide acétique et/ou additionnée de chlorure de sodium. Un alcool, tel l'alcool éthylique, peut remplacer l'eau en totalité ou en partie.

Pour mieux faire comprendre l'objet de la présente invention, on va décrire ci-après, à titre d'exemples purement illustratifs mais non limitatifs, diverses variantes du dispositif en référence aux dessins annexés dans lesquels :
- la figure 1 est une vue en perspective d'une première variante du dispositif selon l'invention, à partir d'une coupe transversale,
- la figure 2 est une vue de côté d'une deuxième variante du dispositif selon l'invention,
- la figure 3 est une vue de dessus du dispositif de la figure 2, et
- la figure 4 est une vue de côté du dispositif des figures 2 et 3, dans son mode d'exploitation prévoyant un pliage transversal de la languette de telle manière que le puits dans lequel est placée la substance active solide pénètre en profondeur le produit dont la température est à contrôler.

En se référant aux dessins, on voit que l'on a désigné par (1) le produit frais, ou congelé, ou surgelé, dont la température doit être contrôlée à tout instant, entre la production et la commercialisation dudit produit, de manière qu'une rupture de la chaîne du froid, dans l'hypothèse où elle se produirait, soit immanquablement détectée et reportée de manière irréversible par un marquage extérieur audit produit.

Le produit 1 est éventuellement conditionné et présenté alors sous un emballage 2, par exemple un film de matière plastique tel du polyéthylène, du polypropylène ou du chlorure de polyvinyle, d'une qualité dite "alimentaire".

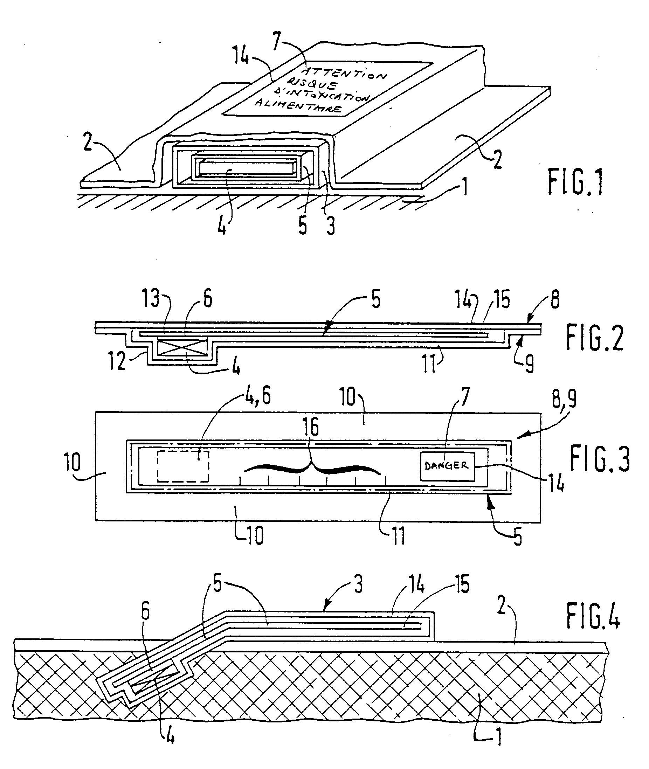

Le dispositif pour le contrôle d'un éventuel réchauffement du produit 1, au-dessus d'une température prédéterminée, et pour l'enregistrement d'une telle éventualité par un marquage irréversible, extérieurement audit produit, comprend une enveloppe 3 en un matériau thermoplastique étanche aux gaz et aux liquides, et au moins pour partie transparent, par exemple au travers d'une fenêtre 14. Toutefois, et de préférence, l'enveloppe 3 est en totalité transparente. Elle est réalisée en une matière plastique de qualité alimentaire, telle que par exemple du polyéthylène, du polypropylène, du polystyrène ou du chlorure de polyvinyle, et formée à partir d'un film fermé sur lui-même et collé ou soudé (figure 1), ou formée à partir de deux films collés ou soudés le long de leurs bords (figures 2 et 3).

Toutefois, avant d'être fermée, l'enveloppe 3 reçoit :
- une substance active 4 ayant son point de transition liquide-solide à la température prédéterminée à contrôler, ladite substance active étant dépourvue d'un quelconque produit incompatible avec l'alimentation, et étant enfermée dans l'enveloppe sous sa forme solidifiée. Elle a donc été au préalable refroidie à une température nettement inférieure à la température à contrôler, en sorte qu'elle forme un bloc de cristaux qui, avantageusement, peut être déposé et fixé sur un tampon 6 en une matière absorbante, tels du papier buvard, du papier de laboratoire ou un matelas de fibres de verre.
- un support unique 5 en un matériau absorbant apte à être imprégné par la substance active 4 puis à permettre la diffusion par capillarité de cette substance lorsque celle-ci est sous sa forme liquide. Ce support absorbant 5 est donc avantageusement en un matériau poreux, tel que par exemple du papier buvard, du papier de laboratoire ou un matelas de fibres de verre.

Lorsqu'ils sont introduits dans l'enveloppe 3, le support absorbant 5 et le bloc solide de substance active 4 sont placés en contact, soit directement (figure 1), soit par l'intermédiaire du tampon 6 lui-même absorbant (figures 2 à 4). En outre, le support 5 est disposé relativement à l'enveloppe 3 de façon telle qu'il soit au moins pour partie 15 visible au travers de la zone transparente (14) de l'enveloppe. De fabrication, et conformément à l'invention, le support comprend dans cette partie visible 15 au moins une inscription 7 ayant une couleur identique à celle dudit support.

Sous la désignation de "substance active", on définit pour toute la description qui va suivre une substance qui contient une matière apte à modifier irréversiblement la couleur de l'un des deux éléments constitués par l'inscription 7 et par la partie du support 5 entourant cette dernière et en revanche impropre à modifier la couleur de l'autre de ces deux éléments. Ainsi, lorsqu'elle atteint la température prédeterminée, ladite substance active passe de son état solide à son état liquide et elle imprègne alors le support 5, puis, à partir d'un temps prédéterminé, fonction exclusive des propriétés mouillantes de la substance et des caractéristiques (longueur, largeur, épaisseur et qualité) du support absorbant 5, ladite substance marque définitivement ledit support par contraste de couleurs autour de l'inscription 7. En conséquence, selon la variante décrite, la substance active 4 pourra contenir soit une matière apte à modifier irréversiblement la couleur du support 5, au moins dans sa partie qui entoure l'inscription 7, et en revanche impropre à modifier la couleur de l'inscription, soit une matière apte à modifier irréversiblement la couleur de l'inscription 7 et en revanche impropre à modifier la couleur de la partie du support 5 qui entoure ladite inscription. Comme autre variante, le support absorbant 5 pourra contenir, au moins dans sa partie qui entoure l'inscription 7, un composant susceptible de prendre irréversiblement une nouvelle couleur, différente de celle de ladite inscription, lorsqu'il est mouillé par la substance active 4 à l'état liquide.

Lorsque le bloc 4 de substance active solide et le support absorbant 5 ont été introduits dans l'enveloppe 3, la partie 15 du support qui comprend l'inscription 7 alors invisible étant correctement disposée sous une zone de l'enveloppe visible depuis l'extérieur, ladite enveloppe est alors hermétiquement fermée, soit par collage, soit par soudage, et de préférence par soudage à froid, par exemple par ultrasons, de sorte qu'il n'y ait aucun risque d'échauffement du bloc 4.

L'ensemble enveloppe 3-bloc 4- support 5 ainsi formé est soit conservé à une température nettement inférieure à la température prédéterminée à contrôler, en sorte que la substance active ne puisse passer de son état solide à son état liquide, soit immédiatement associé au produit 1 en cours ou en fin de production de celui-ci. Au choix du producteur et/ou du consommateur et/ou du législateur, l'ensemble précité sera associé au produit 1 en étant soit plaqué directement contre la surface dudit produit, et par exemple coincé entre cette surface et l'emballage 2 (figure 1), soit totalement extérieur au produit 1 et par suite collé sur la face externe de l'emballage 2, soit encore extérieur pour partie au produit et à l'emballage et enfoncé pour son autre partie dans ledit produit de manière a contrôler la température à l'intérieur du produit et non plus en surface (figure 4).

Dans tous les cas, l'ensemble enveloppe 3-bloc 4-support 5 est associé au produit et/ou à l'emballage 2 en sorte que la fenêtre 14 soit visible extérieurement et que la partie 15 du support absorbant 5 disposée sous cette fenêtre soit également visible extérieurement, en vue de son contrôle par le producteur, le transporteur, le distributeur et le consommateur. Si, comme il est le plus fréquent, l'emballage 2 et l'enveloppe 3 sont en un matériau transparent, le support absorbant 5 est visible en totalité depuis l'extérieur.

Dans la troisième variante selon laquelle le dispositif pénètre pour partie le produit 1 (figure 4), il est bien clair que la partie de l'enveloppe noyée dans le produit est celle qui contient la substance active 4, et que l'autre extrémité de l'enveloppe qui reste visible sous ou par-dessus l'emballage 2 est celle qui présente la fenêtre 14 sous laquelle apparaît la partie 15 du support absorbant qui comprend l'inscription 7, alors invisible.

Dans la variante représentée à la figure 1, le bloc de substance active 4 est enveloppé dans le support absorbant 5, qui lui-même est enfermé dans l'enveloppe 3 en forme de manchon.

La substance active 4 peut avantageusement être obtenue par mélange d'un liquide alimentaire tel que l'eau et/ou un alcool, miscible à un colorant ou une substance colorante tels que le bleu de bromothymol, le rouge de crésol, le rouge de phénol, l'indigotine ou l'érythrosine.

Le liquide et le colorant seront choisis et mélangés dans des proportions relatives telles que le point de transition liquide-solide du mélange soit égal à la température prédéterminée à contrôler.

En prenant pour exemple un mélange d'eau et d'indigotine à 1 %, le point de transition d'une telle solution est de 0°C.

Tant que le produit associe au dispositif de la figure 1 est maintenu à une température inférieure au point de fusion de la solution colorante 4, ladite solution reste solide et elle n'imprègne donc pas le support absorbant 5 puisque, du fait de la totale étanchéité de l'enveloppe 3, les éléments extérieurs à l'enveloppe, telles la lumière, la ventilation, la condensation, l'humidité du milieu extérieur, sont sans influence sur la substance colorée. Le dispositif de la figure 1 est donc stable tant que la température du produit 1 n'atteint pas 0°C.

En revanche, dès que le produit est soumis à un léger réchauffement et atteint une température supérieure a 0°C, la solution colorante (4) redevient liquide et mouille le support absorbant 5.

L'inscription 7 ayant été imprimée avec de l'encre hydrophobe dont la couleur est identique à celle du support ou recouverte d'un vernis incolore impropre à être imprégné par la substance active 4 à l'état liquide, elle repousse le liquide. Par suite, ladite inscription apparaît donc extérieurement, ainsi qu'il est illustré par le texte 7 visible au travers de la fenêtre 14. Ce texte qui caractérise un réchauffement du produit 1 tel que sa température, même pendant un court instant, a dépassé 0°C met simultanément en garde le consommateur. Il peut par exemple correspondre à l'intitulé suivant "ce produit a été décongelé - risque d'intoxication alimentaire" ou "warning : do not eat this product on pain of serious risks for your health". Il peut aussi plus simplement s'agir de la représentation d'une tête de mort.

Si la température à contrôler est différente de 0°C, on comprend qu'il suffit de préparer d'autres mélanges colorants dont le point de transition liquide-solide est soit négatif, pour le contrôle de produits surgelés ou congelés, soit positif, pour le contrôle de produits frais tels les yaourts, les fromages, les beurres et autres produits laitiers, et les produits de charcuterie.

En matière de produits laitiers, la température à contrôler est de + 4°C. Cette température correspond au point de transition d'un mélange de 91,5 % d'acide acétique pur, de 8 % d'eau et de 0,5 % d'indigotine. Un tel mélange sera donc constitutif de la substance active 4 pour le contrôle de la conservation à basse température des produits laitiers, sachant que si ceux-ci sont soumis à un réchauffement passager provoquant leur élévation de température au-dessus de + 4°C, le support absorbant 5 laissera alors apparaître l'inscription (7).

A l'inverse, pour le contrôle de températures négatives, on ajoutera à l'eau colorée par 1 % d'indigotine du chlorure de sodium pour le contrôle des faibles températures négatives et de l'alcool éthylique pour le contrôle des fortes températures négatives. On sait par exemple que l'addition de 5 % de chlorure de sodium diminue le point de fusion de la solution eau-indigotine à - 2,7°C et que l'addition de 10 % de chlorure de sodium diminue ce point de fusion à - 5,8°C. Il est donc possible de contrôler et de choisir des points de fusion différents au moyen de mélanges eutectiques d'eau et de chlorure de sodium. Les mélanges précités trouveront une première application pour le contrôle d'un éventuel réchauffement des produits pharmaceutiques.

Pour les contrôles de températures négatives plus basses, par exemple comprises entre - 5°C et - 20°C, on ajoute à la solution d'eau colorée par 1 % d'indigotine de l'alcool éthylique dont la quantité en poids, par rapport à l'eau, est comprise entre 14 % et 36 %. De tels mélanges conviendront pour le contrôle du maintien en congélation des produits alimentaires. Si la température à contrôler est estimée suffisante à - 14°C, voire - 7°C, on réalise les mélanges eutectiques d'eau et d'alcool éthylique appropriés, avec en conséquence une quantité d'alcool comprise entre 14 et 36 % du poids d'eau.

On sait aussi que certains produits ne perdent pas leur qualité et ne sont pas dangereux à la consommation si le temps pendant lequel leur température dépasse la température prédéterminée à contrôler est bref. Ce temps est en général de quelques minutes et peut atteindre jusqu'à 30 mn.

Pour ces produits, il est donc intéressant de contrôler leur éventuel réchauffement au-dessus de la température prédéterminée, ainsi que le temps de cet éventuel réchauffement, afin de déterminer s'ils demeurent consommables.

Le dispositif représenté aux figures 2 à 4 répond à cet objectif. L'enveloppe 3 d'un tel dispositif est formée de deux films 8 et 9 de matière plastique, qui sont soudés ou collés par leurs bords 10, le film 8 étant plat et le film 9 présentant une cuvette centrale 11 pour la réception du support absorbant 5 en forme de languette, et un puits latéral 12 pour la réception du bloc de substance active 4. Dans cette variante le bloc 4 est avantageusement collé à la languette 5 par l'intermédiaire du tampon 6.

La substance active est dans un premier exemple l'un des mélanges colorés précités, choisi en fonction de l'application considérée.

Dans la description qui va suivre, le mélange choisi est de l'eau colorée à 1 % d'indigotine ou 1 % d'érythrosine, et a donc son point de transition liquide-solide à 0°C.

Plusieurs essais ont été réalisés en utilisant 0,3 cm³ de substance colorante placée dans un puits de 10 mm de long, 8 mm de large et 4 mm de profondeur. On a fait varier la nature du support absorbant 5, tout en conservant constantes ses dimensions : 100 mm de longueur, 10 mm de largeur et 0,18 mm d'épaisseur.

Pour un premier échantillon, on a utilisé pour support absorbant du papier en cellulose pure (Whatman lCHR) et pour second support absorbant on a utilisé du papier filtre en microfibres de verre (Whatman GF/A).

Les essais ont permis de montrer que, tant que les dispositifs précités étaient maintenus a une température inférieure à 0°C, point de fusion de la solution colorante, cette dernière demeure solide et ne colore aucun des deux papiers absorbants.

Les deux dispositifs ont ensuite été placés à une même température supérieure à 0°C, et il a été constaté que les papiers commençaient à se colorer en même temps au niveau de leur base 13.

Les deux supports précités permettent la diffusion par capillarité de la substance colorante, cette diffusion se faisant progressivement et régulièrement le long de la languette 5 tant que les dispositifs sont à une température supérieure à 0°C.

Le support Whatman lCHR a été coloré en totalité au bout de 14 minutes tandis que le support Whatman GF/A n'a été coloré en totalité qu'au bout de 30 minutes. On observe donc que, selon la nature du support absorbant employé, selon la texture de son papier, la diffusion par capillarité de la substance colorante depuis la base 13 jusqu'à l'inscription 7 portée par la seconde extrémité 15 de la languette placée sous la fenêtre 14 varie notablement.

On peut ainsi contrôler, par exemple au moyen de repères 16 portés le long des bords de la languette 5, le temps pendant lequel le produit 1 associé au dispositif représenté sur les figures 2 à 4, a été porte à une température supérieure à 0°C. Ce contrôle est facilité si les films 8 et 9 constituant l'enveloppe 3 sont totalement transparents.

En tout état de cause, on peut aussi contrôler un éventuel réchauffement d'un produit dans lequel l'extrémité de l'enveloppe supportant la substance active 4 a été noyée, puisqu'il suffit que la seconde extrémité libre de ladite enveloppe, munie au moins d'une fenêtre transparente 14, soit extérieure au moins au produit 1, et de préférence également à l'emballage 2 (figure 4). Si une inscription 7 apparaît en bout (15) du support absorbant 5, sous la fenêtre 14, cette inscription indiquera que le produit 1 a été placé à une température supérieure à 0°C, pendant une durée au moins égale à 14 minutes, ou au moins égale à 30 minutes selon la nature du support 5 utilisé, et n'est donc plus consommable si la durée en question est connue comme étant celle à partir de laquelle le produit 1 perd sa qualité ou devient dangereux pour la santé du consommateur.

Autrement dit, grâce à un mélange coloré approprié, on peut déjà contrôler un éventuel réchauffement du produit frais à surveiller, par un marquage coloré à la base 13 du support absorbant 5, et en outre par le choix de la nature du support absorbant et de la longueur de ce support absorbant, on peut contrôler, par la diffusion par capillarité de la substance colorante sur le support poreux 5, le temps pendant lequel ce réchauffement a eu lieu, que ce soit d'ailleurs en une ou plusieurs périodes de réchauffement.

Il est clair que la possibilité de retarder ou d'accélérer la diffusion de la substance colorante, donc la réponse du dispositif, est également rendue possible en changeant non seulement la nature et/ou la longueur du support absorbant (5), mais aussi son épaisseur, sa largeur ou sa forme.

Il vient d'être décrit la première variante de réalisation du dispositif selon l'invention, dans laquelle la substance active 4 est une solution aqueuse colorée apte à modifier irréversiblement la couleur du support 5, au moins dans sa partie qui entoure l'inscription 7, et en revanche impropre à modifier la couleur de ladite inscription, celle-ci étant imprimée avec de l'encre hydrophobe ou recouverte d'un vernis incolore impropre à être imprégné par l'eau.

Le plus généralement, l'inscription sera en lettres blanches sur un support absorbant blanc d'origine, donc invisibles en temps normal. En revanche, après réchauffement, lorsque la substance colorante, par exemple rouge, atteindra et imprègnera toute la zone du support placée autour de ladite inscription, elle révélera l'inscription en faisant ressortir le texte de ces lettres blanches sur un fond rouge.

En autre variante, utilisable avec l'un quelconque des dispositifs des figures 1 et 2, on peut utiliser une inscription 7, imprimée avec une encre neutre à l'état sec, par exemple blanche, apposée sur un support absorbant également blanc d'origine, qui se colorera lorsqu'elle sera imprégnée par la substance active, de l'eau éventuellement additionnée d'alcool, qui aura diffusé après décongélation. Dans ce cas, l'eau pure ou l'eau alcoolisée ne modifiera pas la couleur de la partie du support qui entoure l'inscription 7 et en revanche, après dilution de la couche protectrice des lettres de l'inscription par le liquide, la couleur fondamentale de l'encre sera révélée et le texte correspondant apparaîtra de façon irréversible.

En autre variante, on peut aussi utiliser une inscription 7 apposée dans une zone du support absorbant imprégnée d'origine d'une solution neutre d'une matière colorante, par exemple de la phénolphtaléine. L'inscription est en lettres blanches imprimées sur un support blanc d'origine, et la substance active alors utilisée est de l'eau additionnée de chlorure de sodium. Dès que le produit à contrôler subit une élévation de température, et dépasse la température prédéterminée, ladite substance active devient liquide et se propage le long du support, jusqu'à mouiller la zone de l'inscription, faisant alors ressortir cette dernière en lettres blanches sur un fond désormais et irréversiblement coloré en rouge.

## Revendications

1. Dispositif pour le contrôle d'un éventuel réchauffement d'un produit (1) frais, ou surgelé ou congelé, au-dessus d'une température prédéterminée, et pour l'enregistrement par un marquage irréversible (7), extérieurement audit produit, d'une telle éventualité, ledit dispositif comprenant: a) une enveloppe (3) hermétiquement close dans laquelle est enfermée une substance active (4) ayant son point de transition liquide-solide à ladite température prédéterminée, ladite enveloppe (3) étant en un matériau étanche aux gaz à et aux liquides et au moins pour partie transparent dans une zone (14), et ladite substance (4) étant enfermée dans cette enveloppe sous sa forme solidifiée, et b) un support (5) en un matériau absorbant apte à être imprégné par la substance (4) puis à permettre la diffusion par capillarité de cette substance lorsque celle-ci est sous sa forme liquide, ledit support étant également enfermé dans l'enveloppe (3) de façon telle qu'il soit placé au contact de la masse de ladite substance active solide (4) et qu'il soit au moins pour partie (15) visible au travers de la zone transparente (14) de l'enveloppe, caractérisé en ce que, dans sa partie (15) visible au travers de ladite zone transparente (14) de l'enveloppe (3), le support (5) comprend sur sa face externe et apparente au moins une inscription (7) ayant une couleur identique à celle du support, indécelable en temps normal, et en ce que la substance active (4), en contact avec ledit support, d'une part est éloignée de ladite inscription (7) et, d'autre part, contient une matière apte à modifier irréversiblement la couleur de l'un des deux éléments constitués par l'inscription (7) et par la partie du support (5) entourant cette dernière et en revanche impropre à modifier la couleur de l'autre de ces deux éléments, de sorte que lorsque, atteignant la température prédéterminée, ladite substance active passe de son état solide à son état liquide et imprègne alors le support (5), elle marque définitivement ledit support sur sa face externe et apparente par contraste de couleurs autour de l'inscription (7).

2. Dispositif selon la revendication 1, caractérisé en ce que la substance active (4) contient une matière apte à modifier irréversiblement la couleur du support (5), au moins dans sa partie qui entoure l'inscription (7) apparente mais indécelable en temps normal, et en revanche impropre à modifier la couleur de l'inscription.

3. Dispositif selon l'une des revendications 1 et 2 caractérisé en ce que la substance active (4) est une solution aqueuse et en ce que l'inscription (7) indécelable en temps normal est imprimée sur la face externe et apparente du support (5) avec de l'encre hydrophobe dont la couleur est identique à celle du support.

4. Dispositif selon l'une des revendications 1 et 2, caractérisé en ce que l'inscription (7) apparente mais indécelable en temps normal est recouverte d'un vernis incolore impropre à être imprégné par la substance active (4) à l'état liquide.

5. Dispositif selon la revendication 1, caractérisé en ce que la substance active (4) contient une matière apte à modifier irréversiblement la couleur de l'inscription (7) apparente mais indécelable en temps normal et en revanche impropre à modifier la couleur de la partie du support (5) qui entoure ladite inscription.

6. Dispositif selon la revendication 5, caractérisé en ce que l'inscription (7) est imprimée sur la face externe et apparente du support (5) avec une encre neutre à l'état sec et qui se colore lorsqu'elle est imprégnée par la substance active (4) à l'état liquide.

7. Dispositif selon la revendication 1, caractérisé en ce que le support absorbant (5) contient, sur sa face externe et apparente au-travers de la zone (14) de l'enveloppe, au moins dans sa partie (15) qui entoure l'inscription (7), un composant susceptible de prendre irréversiblement une nouvelle couleur, différente de celle de ladite inscription, lorsqu'il est mouillé par la substance active (4) à l'état liquide.

8. Dispositif selon l'une des revendications 1 à 7, caractérisé en ce que la substance active est de l'eau.

9. Dispositif selon l'une des revendications 1 à 4, caractérisé en ce que la substance active est obtenue par mélange d'eau et d'une substance colorante.

10. Dispositif selon l'une des revendications 7 à 9, caractérisé en ce que la substance active contient de l'acide acétique.

11. Dispositif selon l'une des revendications 7 à 9, caractérisé en ce que la substance active contient du chlorure de sodium.

12. Dispositif selon l'une des revendications 7 à 9, caractérisé en ce que la substance active contient un alcool.

## Claims

1. A device for monitoring a possible rewarming of a fresh, frozen, or flash-frozen product (1) beyond a predetermined temperature, and for recording such an eventuality by an irreversible marking (7) outside said product, said device including:
a) a hermetically sealed envelope (3) in which an active substance (4) is enclosed having its liquid-solid transition temperature at said predetermined temperature, said envelope (3) being of a material that is tight with respect to gases and liquids and is at least partially transparent in a zone (14), and said substance (4) being enclosed in this envelope in its solidified form, and
b) a substrate (5) of an absorbent material that is capable of being impregnated with the substance (4) and then of permitting the diffusion by capillary action of this substance when the substance is in its liquid form, said substrate being also enclosed in the envelope (3) in such a fashion that it is put into contact with the bulk of said active solid substance (4) and that it is visible at least partially (15) through the transparent zone (14) of the envelope, characterized in that in its portion (15) visible through said transparent zone (14) of the envelope (3), the substrate (5) includes on its outer and apparent side at least one inscription (7) having a normally undetectable color identical to that of the substrate, and that the active substance (4) in contact with said substrate is on the one hand remote from said inscription (7) and on the other hand contains a material that is capable of irreversibly modifying the color of one of the two elements constituted by the inscription (7) and by the portion of the substrate (5) surrounding the inscription, and on the other hand is incapable of modifying the color of the other of these elements, such that when upon attaining the predetermined temperature said active substance passes from its solid phase to its liquid phase and thus impregnates the substrate (5), it definitively marks said substrate on its outer and apparent side by a color contrast around the inscription (7).

2. The device of claim 1, characterized in that the active substance (4) contains a material that is capable of irreversibly modifying the color of the substrate (5), at least in its portion that surrounds the apparent but normally undetectable inscription (7), and on the other hand is incapable of modifying the color of the inscription.

3. The device of one of claims 1 and 2, characterized in that the active substance (4) is an aqueous solution, and that the normally undetectable inscription (7) is printed on the outer and apparent face of the substrate (5) with hydrophobic ink, the color of which is identical to that of the substrate.

4. The device of one of claims 1 and 2, characterized in that the apparent but normally undetectable inscription (7) is covered with a colorless varnish that is incapable of being impregnated with the active substance (4) in its liquid phase.

5. The device of claim 1, characterized in that the active substance (4) contains a material that is capable of irreversibly modifying the color of the apparent but normally undetectable inscription (7) and on the other hand is incapable of modifying the color of the portion of the substrate (5) that surrounds said inscription.

6. The device of claim 5, characterized in that the inscription (7) is printed on the outer and apparent face of the substrate (5) with an ink that is neutral in the dry state and colors when it is impregnated with the active substance (4) in the liquid phase.

7. The device of claim 1, characterized in that the absorbent substrate (5) contains, on its outer and apparent face through the zone (14) of the envelope, at least in its portion (15) that surrounds the inscription (7), an ingredient that is capable of irreversibly assuming a new color, different from that of said inscription, when it is moistened with the active substance (4) in its liquid phase.

8. The device of one of claims 1 to 7, characterized in that the active substance is water.

9. The device of one of claims 1 to 4, characterized in that the active substance is obtained by mixing water and a coloring substance.

10. The device of one of claims 7 to 9, characterized in that the active substance contains acetic acid.

11. The device of one of claims 7 to 9, characterized in that the active substance contains sodium chloride.

12. The device of one of claims 7 to 9, characterized in that the active substance contains an alcohol.

## Patentansprüche

1. Vorrichtung zum Kontrollieren einer eventuellen Wiedererwärmung über eine vorbestimmte Temperatur eines kalten oder überfrorenen oder gefrorenen Produkts (1) und zum Anzeigen eines solchen Ereignisses durch eine äußere, unveränderliche Markierung (7) am Produkt, enthaltend: a) eine hermetisch geschlossene Hülle (3), in der eine aktive Substanz (4) eingeschlossen ist, die einen Flüssig/Fest-Übergangspunkt hat, der bei der genannten vorbestimmten Temperatur liegt, wobei die Hülle (3) aus einem gas- und feuchtigkeitsdichten Material besteht und in einer Zone (14) wenigstens teilweise transparant ist und die genannte Substanz (4) in dieser Hülle in erstarrter Form eingeschlossen ist, und b) einen Träger (5) aus einem absorbierenden Material, das dazu geeignet ist, durch die Substanz (4) imprägniert zu werden und anschließend die Ausbreitung dieser Substanz durch Kapillarwirkung zu ermöglichen, wenn die Substanz flüssig ist, wobei dieser Träger ebenfalls in der Hülle (3) derart eingeschlossen ist, daß er mit der Masse der aktiven festen Substanz (4) in Berührung ist und wenigstens zum Teil (15) durch die transparente Zone (14) der Hülle sichtbar ist, **dadurch gekennzeichnet,** daß der durch die genannte transparente Zone (14) der Hülle (3) sichtbare Teil (15) des Trägers (5) auf seiner äußeren und sichtbaren Seite wenigstens eine Inschrift (7) trägt, die eine mit der Farbe des Trägers identische Farbe aufweist und die normalerweise nicht erkennbar ist, und daß die mit dem Träger in Berührung befindliche aktive Substanz (4) einerseits von der genannten Inschrift (7) Abstand hat und andererseits einen Stoff enthält, der geeignet ist, die Farbe von einem der zwei Elemente, die von der Inschrift (7) und von dem diesen umgebenden Teil des Trägers (5) gebildet sind, irreversibel zu verändern, und andererseits nicht geeignet ist, die Farbe des anderen dieser zwei Elemente zu verändern, sodaß bei Erreichen der vorbestimmten Temperatur die aktive Substanz von ihrem festen Zustand in ihren flüssigen Zustand übergeht und somit in den Träger (5) eindringt und den Träger schließlich an seiner äußeren, sichtbaren Seite durch farbliche Abhebung um die Inschrift (7) herum markiert.

2. Vorrichtung nach Anspruch 1, dadurch gekennzeichnet, daß die aktive Substanz (4) einen Stoff enthält, der geeignet ist, die Farbe des Trägers (5) wenigstens in seinem Teil, der die Inschrift (7) sichtbar aber normalerweise unerkennbar umgibt, zu verändern, und andererseits ungeeignet ist, die Farbe der Inschrift zu verändern.

3. Vorrichtung nach einem der Ansprüche 1 und 2, dadurch gekennzeichnet, daß die aktive Substanz (4) eine wässrige Lösung ist und daß die normalerweise unerkennbare Inschrift (7) auf die äußere und sichtbare Seite des Trägers (5) mit einem hydrophoben Farbstoff aufgedruckt ist, dessen Farbe mit der des Trägers identisch ist.

4. Vorrichtung nach einem der Ansprüche 1 und 2, dadurch gekennzeichnet, daß die sichtbare, aber normalerweise unerkennbare Inschrift (7) von einem farblosen Lack abgedeckt ist, der von der aktiven Substanz (4) im flüssigen Zustand nicht durchdringbar ist.

5. Vorrichtung nach Anspruch 1, dadurch gekennzeichnet, daß die aktive Substanz einen Stoff enthält, der dazu geeignet ist, die Farbe der sichtbaren aber normalerweise unerkennbaren Inschrift (7) irreversibel zu verändern, und andererseits nicht in der Lage ist, die Farbe des die Inschrift umgebenden Teils des Trägers (5) zu verändern.

6. Vorrichtung nach Anspruch 5, dadurch gekennzeichnet, daß die Inschrift (7) auf die äußere und sichtbare Seite des Trägers mit einem neutralen Farbstoff in trockenem Zustand aufgedruckt ist, und der sich verfärbt, wenn er mit der aktiven Substanz im flüssigen Zustand getränkt wird.

7. Vorrichtung nach Anspruch 1, dadurch gekennzeichnet, daß der absorbierende Träge (5) auf seiner äußeren, durch die Zone (14) der Hülle sichtbaren Seite wenigstens in seinem die Inschrift (7) umgebenden Teil (15) eine Zusammensetzung enthält, die geeignet ist, irreversibel eine neue Farbe anzunehmen, die von der der Inschrift verschieden ist, wenn sie mit der aktiven Substanz (4) im flüssigen Zustand befeuchtet wird.

8. Vorrichtung nach einem der Ansprüche 1 bis 7, dadurch gekennzeichnet, daß die aktive Substanz Wasser ist.

9. Vorrichtung nach einem der Ansprüche 1 bis 4, dadurch gekennzeichnet, daß man die aktive Substanz durch Vermischen eines Farbstoffs mit Wasser erhält.

10. Vorrichtung nach einem der Ansprüche 7 bis 9, dadurch gekennzeichnet, daß die aktive Substanz Essigsäure enthält.

11. Vorrichtung nach einem der Ansprüche 7 bis 9, dadurch gekennzeichnet, daß die aktive Substanz Natriumchlorid enthält.

12. Vorrichtung nach einem der Ansprüche 7 bis 9, dadurch gekennzeichnet, daß die aktive Substanz Alkohol enthält.
